(19)

Europäisches
Patentamt
European
Patent Office
Office européen
des brevets

(11) **EP 4 648 367 A1**

(12) **EUROPEAN PATENT APPLICATION**
published in accordance with Art. 153(4) EPC

(43) Date of publication:
**12.11.2025 Bulletin 2025/46**

(21) Application number: **23915035.2**

(22) Date of filing: **29.12.2023**

(51) International Patent Classification (IPC):
***H04L 27/26*** *(2006.01)*

(52) Cooperative Patent Classification (CPC):
**H04L 27/26**

(86) International application number:
**PCT/KR2023/022027**

(87) International publication number:
**WO 2024/147576 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.01.2023 KR 20230000332**

(71) Applicant: **LG Electronics Inc.**
**Yeongdeungpo-gu**
**Seoul 07336 (KR)**

(72) Inventors:
• **PARK, Eunsung**
**Seoul 06772 (KR)**
• **CHUN, Jinyoung**
**Seoul 06772 (KR)**
• **CHOI, Jinsoo**
**Seoul 06772 (KR)**
• **LIM, Dongguk**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING PPDU FOR SHORT FRAME IN WIRELESS LAN SYSTEM**

(57) Disclosed are a method and device for transmitting and receiving a PPDU for a short frame in a wireless LAN system. A method performed by a first station (STA) in a wireless LAN system according to an embodiment disclosed herein may comprise the steps of: generating a physical layer protocol data unit (PPDU) including at least one field indicating the PPDU related to a short frame and a universal-signal (U-SIG) field including 1-bit indication information indicating one of a first type or a second type related to a data field of the PPDU; and transmitting the PPDU to a second STA.

FIG.9

Generate PPDU including
at least one field indicating
PPDU related to short frame, and
U-SIG field including
1-bit indication information indicating
one of first type or second type
related to data field of PPDU — S910

Transmit PPDU to second STA — S920

## Description

[TECHNICAL FIELD]

The present disclosure relates to a method and a device for transmitting or receiving a PPDU for a short frame in a wireless local area network (WLAN) system.

[BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

[Disclosure]

[Technical Problem]

A technical problem of the present disclosure is to provide a method and a device for transmitting or receiving various types of PPDUs for a short frame in a WLAN system.

The technical objects to be achieved by the present disclosure are not limited to the above-described technical objects, and other technical objects which are not described herein will be clearly understood by those skilled in the pertinent art from the following description.

[Technical Solution]

A method performed by a first station (STA) in a WLAN system according to an aspect of the present disclosure may include generating a physical layer protocol data unit (PPDU) including at least one field indicating a PPDU related to a short frame and a universal-signal (U-SIG) field including 1-bit indication information indicating one of a first type or a second type related to a data field of the PPDU; and transmitting the PPDU to a second STA.

A method performed by a second station (STA) in a WLAN system according to an additional aspect of the present disclosure may include receiving, from a first STA, a physical layer protocol data unit (PPDU) including at least one field indicating a PPDU related to a short frame and a universal-signal (U-SIG) field including 1-bit indication information indicating one of a first type or a second type related to a data field of the PPDU; and based on the at least one field and the 1-bit indication information, decoding the data field of the PPDU.

[Technical Effects]

According to the present disclosure, a method and a device for transmitting or receiving various types of PPDUs for a short frame in a WLAN system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram illustrating an exemplary structure of a WLAN system to which the present disclosure may be applied.

FIG. 3 is a diagram for describing a link setup process to which the present disclosure may be applied.

FIG. 4 is a diagram for describing a backoff process to which the present disclosure may be applied.

FIG. 5 is a diagram for describing a frame transmission operation based on CSMA/CA to which the present disclosure may be applied.

FIG. 6 is a diagram for describing an example of a frame structure used in a WLAN system to which the present disclosure may be applied.

FIG. 7 is a diagram illustrating examples of PPDUs defined in the IEEE 802.11 standard to which the present disclosure may be applied.

FIG. 8 is a diagram showing examples of a PPDU format for a short frame to which the present disclosure may be applied.

FIG. 9 is a diagram for describing a method performed by the first STA transmitting a PPDU related to a short frame according to the present disclosure.

FIG. 10 is a diagram for describing a method performed by the second STA receiving a PPDU related to a short frame according to the present disclosure.

FIG. 11 is a diagram showing an example of a transmitter block diagram including a BCC interleaver block according to the present disclosure.

FIG. 12 is a diagram showing an example of a transmitter block diagram including a LDPC tone mapper block according to the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

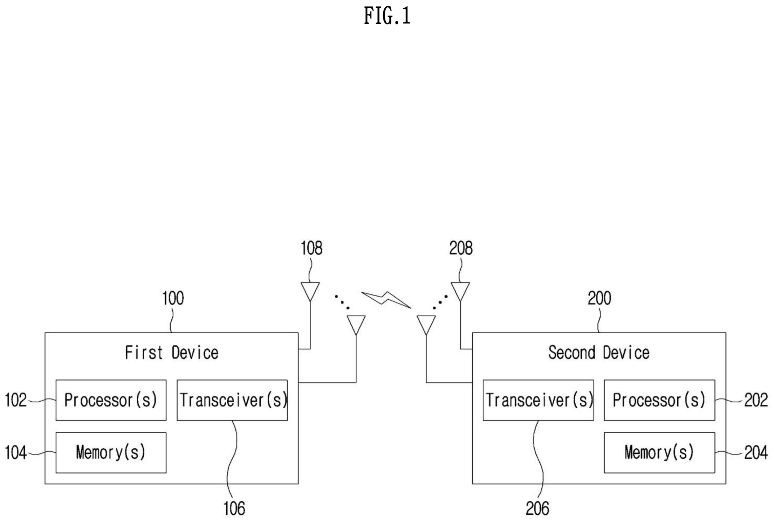

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

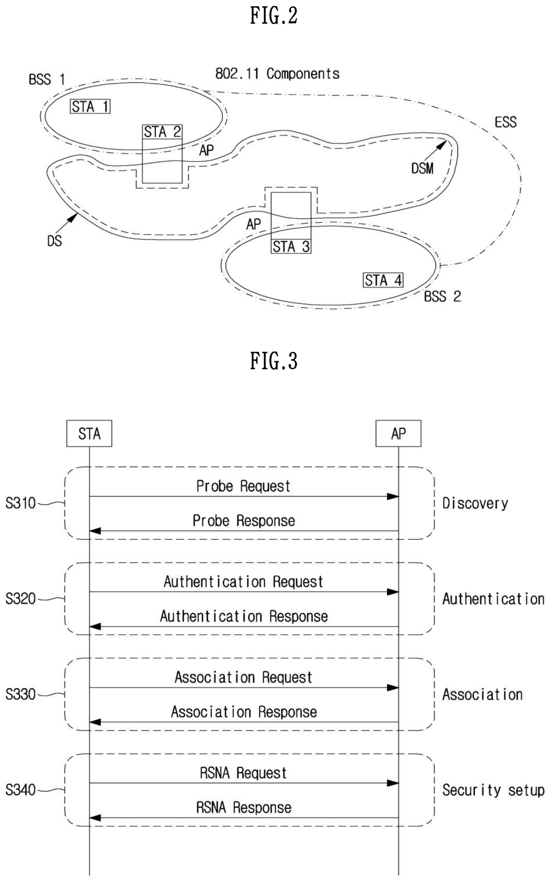

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

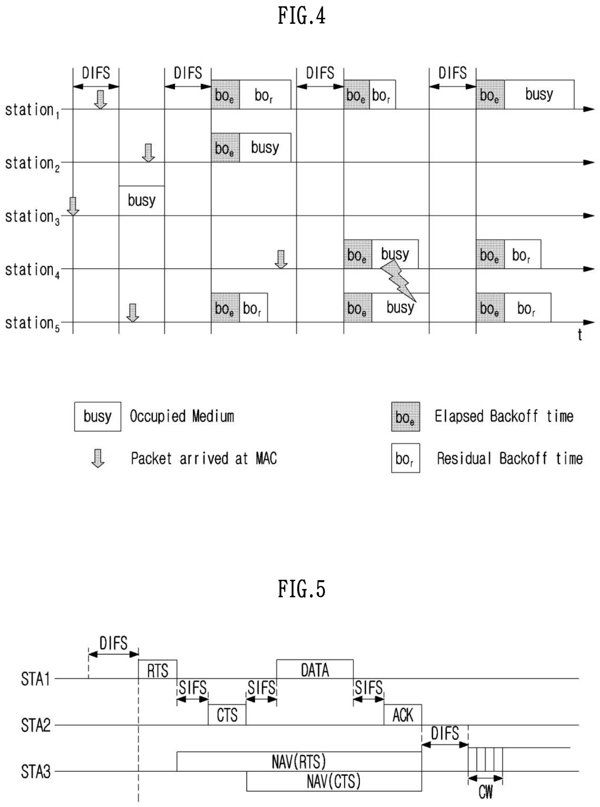

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to $2^n-1$ (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

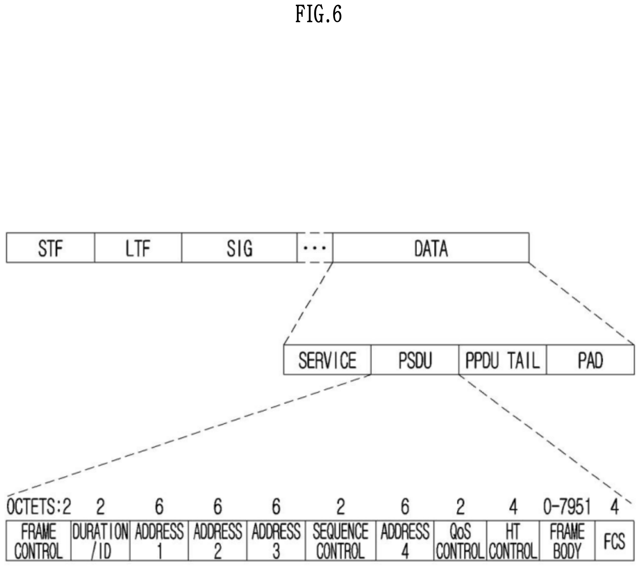

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

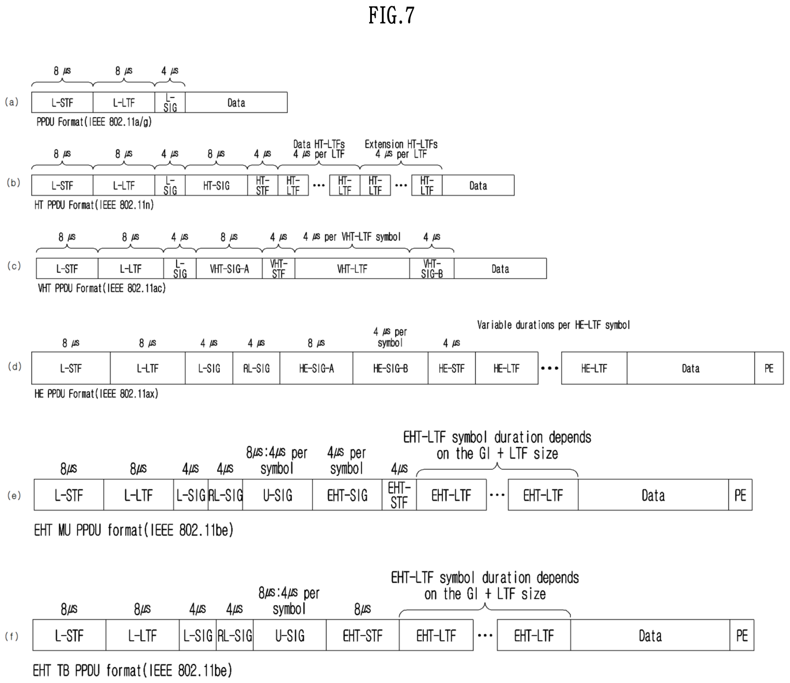

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types of) RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

A PPDU for a short frame

In order to transmit a short frame with a small amount of data in a WLAN system, a PPDU in a new format may be supported to reduce latency and improve throughput. A new format may be referred to as a PPDU format for a short frame.

It may not be appropriate to use the EHT PPDU format of the existing WLAN system (e.g., the PPDU format of FIG. 7(e) described above) as it is for transmitting a short frame with a small amount of data. For example, the existing PPDU format may have a length of 12.8 us per OFDM symbol and a guard interval (GI) (e.g., corresponding to 4x numerology). Such a long length per OFDM symbol may not be suitable for supporting low latency.

For the transmission of a short frame, it may be considered to use the non-HT duplicate PPDU of the existing WLAN system. For example, non-HT duplicate transmission may refer to a method in which a legacy preamble (i.e., L-STF, L-LTF and L-SIG fields) and a data field are repeated every 20MHz in a frequency domain within a PPDU. In this non-HT duplicate PPDU, the same data is duplicated and transmitted every 20MHz, so it may not be suitable for supporting high throughput.

It may also be considered to use the VHT PPDU format of the existing WLAN system (e.g., the PPDU format of FIG. 7(c)) for transmitting a short frame. However, a VHT PPDU format does not support preamble puncturing, etc., so it may be low in channel utilization and may not be suitable in terms of throughput.

In order to overcome this problem, a PPDU format suitable for transmitting a short frame may be newly defined.

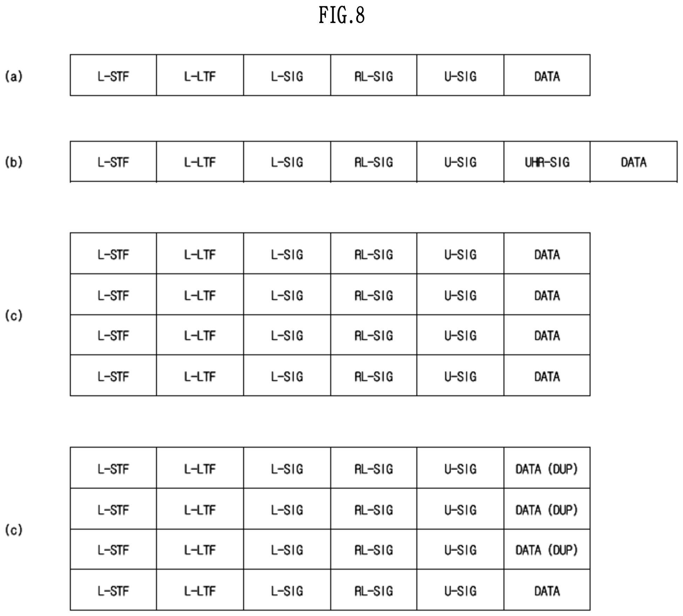

FIG. 8 is a diagram showing examples of a PPDU format for a short frame to which the present disclosure may be applied.

In the PPDU format of FIG. 8(a), L-STF, L-LTF, L-SIG and RL-SIG fields may be configured equally to the corresponding fields of an EHT PPDU described in FIG. 7(e). The PHY version indicator subfield of an U-SIG field may indicate UHR. In other words, a PPDU format for a short frame may belong to an UHR PPDU format. In addition, all SIG fields (i.e., L-SIG, RL-SIG, U-SIG) and a data field may have the same numerology (i.e., subcarrier spacing, fast Fourier transform (FFT) size (i.e., corresponding to the number of subcarriers/tones), etc.) as a L-LTF field. This PPDU format supports only single input single output (SISO) transmission, and accordingly, additional UHR-STF and URH-LTF fields may not be required.

In this way, in a PPDU format for a short frame, an UHR-STF and an UHR-LTF are not included (i.e., only a L-STF and a L-LTF are included), and a DATA field may also have a 1x numerology (equal to a L-LTF). In other words, the numerology of all fields in a PPDU format for a short frame may be the same. In a PPDU format for a short frame, an UHR-STF and an UHR-LTF do not exist and the OFDM symbol length of a data field also corresponds to 3.2 us + GI length, so latency may be effectively reduced. In addition, since a PPDU format for a short frame may indicate a bandwidth and a puncturing pattern, etc. through an U-SIG field, it may be advantageously utilized in terms of channel utilization and throughput. However, a PPDU format for a short frame may be applied only when SISO transmission is performed.

The PPDU format of FIG. 8(b) may further include an UHR-SIG field compared to the PPDU format of FIG. 8(a). In other words, an UHR-SIG field may be optionally included in a PPDU format for a short frame. When an UHR-SIG field is included, it may have the same numerology as a L-LTF field, just like other SIG fields and a data field. In other words, the numerology of all fields in a PPDU format for a short frame may be the same. In addition, the description of each field in FIG. 8(b) is the same as the description of corresponding fields in FIG. 8(a).

FIG. 8(c) shows a format in which a data field is encoded in a non-duplicated manner in a wide bandwidth (e.g., 80MHz bandwidth) PPDU format based on the PPDU format of FIG. 8(a). In other words, a DATA field in a 20MHz unit may include different data in FIG. 8(c). However, a tone plan in a 20MHz unit may be repeated equally within a PPDU bandwidth.

FIG. 8(d) shows a format in which a data field is encoded in an UHR-duplicated manner in a wide bandwidth PPDU format based on the PPDU format of FIG. 8(a). In FIG. 8(c), a DATA field in a 20MHz unit may include the same data (i.e., indicated as DATA(DUP)).

In the example of FIG. 8(c) and FIG. 8(d), the remaining fields (i.e., L-STF, L-LTF, L-SIG, RL-SIG, U-SIG) excluding a data field may be duplicated in a 20MHz unit. In the example of FIG. 8(c) and FIG. 8(d), UHR-SIG may be further included like the format of FIG. 8(b), and UHR-SIG may also be duplicated in a 20MHz unit.

In the present disclosure, the PPDU format of FIG. 8(c) may be used to support low latency, and may be referred to as the first type related to the data field of a PPDU. The PPDU format of FIG. 8(d) may be used to support high reliability, and may be referred to as the second type related to the data field of a PPDU.

A PHY operation for a PPDU for a short frame

In order to transmit and receive a PPDU for a short frame, it is necessary to define a method for indicating that a corresponding PPDU is a PPDU for a short frame. In addition, in order to support the number of new data tones according to various bandwidths and various puncturing patterns of a PPDU for a short frame, it is necessary to newly define details for a binary convolutional code (BCC) interleaver or a low density parity check code (LDPC) tone mapper. Various examples of the present disclosure for PHY operation/design to support a PPDU for a short frame as above are described below.

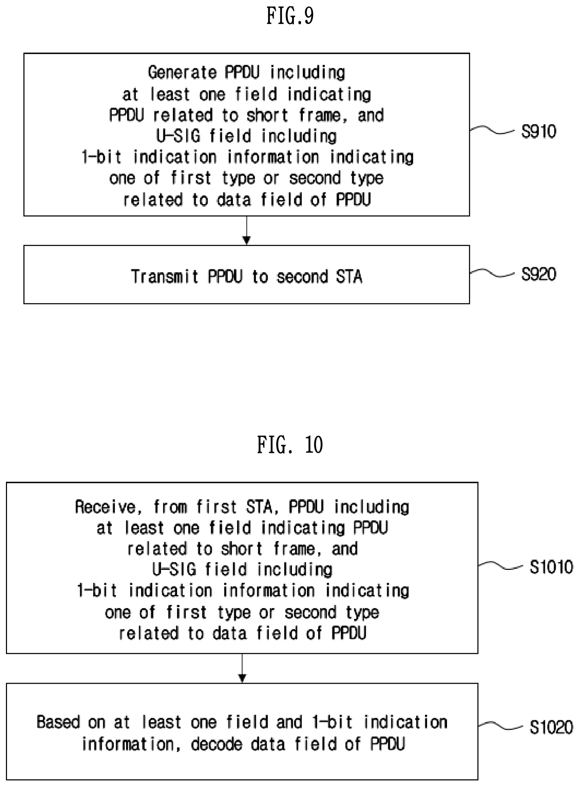

FIG. 9 is a diagram for describing a method performed by a first STA transmitting a PPDU related to a short frame according to the present disclosure.

In S910, the first STA may generate a PPDU including at least one field indicating a PPDU related to a short frame, and an U-SIG field including 1-bit indication information indicating one of the first type or the second type related to the data field of a PPDU.

At least one field indicating a PPDU related to a short frame may include at least one of a PPDU type field and/or an UL/DL field within the U-SIG field of a corresponding PPDU. In other words, the specific value of a PPDU type field may indicate that a corresponding PPDU is a PPDU related to a short frame. Alternatively, the combination of the specific value of a PPDU type field and the specific value of an UL/DL field may indicate that a corresponding PPDU is a PPDU related to a short frame.

1-bit indication information indicating one of the first type or the second type related to the data field of a PPDU may be included in a field other than a PPDU type field and/or an UL/DL field within the U-SIG field of a corresponding PPDU. The first type may correspond to a PPDU format in which the data field of a PPDU is not duplicated/repeated in a 20MHz unit (i.e., includes different data every 20MHz). The second type may correspond to a PPDU format in which the data field of a PPDU is duplicated/repeated in a 20MHz unit (i.e., includes the same data every 20MHz).

According to the first type or the second type, and also according to whether a BCC interleaver or a LDPC tone mapper is applied to the data field of a PPDU, and also according to whether dual carrier modulation (DCM) is applied, whether to apply a segment parser, whether to change a BCC interleaver parameter and whether to change a LDPC tone mapper parameter may be defined.

For example, for the second type, since a data field is repeated in a 20Mhz unit, the existing BCC interleaver parameter or the existing LDPC parameter may be applied as it is without applying a segment parser.

For example, for the first type, since a data field is not repeated in a 20Mhz unit, a segment parser may be applied, and the existing BCC interleaver parameter or the existing LDPC parameter may be applied as it is. Alternatively, when it is the first type and DCM is not applied, without applying a segment parser, only one of the number of columns or the number of rows of a BCC interleaver parameter for the non-application of the existing DCM may be multiplied by the number of 20MHz units, or the tone mapping distance parameter of a LDPC tone mapper parameter for the non-application of the existing DCM may be multiplied by the number of 20MHz units. When it is the first type and DCM is applied, without applying a segment parser, only one of the number of columns or the number of rows of a BCC interleaver parameter for the application of the existing DCM may be multiplied by the number of 20MHz units, or the tone mapping distance parameter of a LDPC tone mapper parameter for the application of the existing DCM may be multiplied by the number of 20MHz units.

Additionally, for both the first type and the second type (i.e., regardless of the first type or the second type), the same phase rotation may be applied to all fields of a PPDU. Specifically, even for the first type where the data field of a PPDU is not repeated in a 20MHz unit, the same phase rotation as phase rotation applied to previous fields (i.e., L-STF, L-LTF, L-SIG, RL-SIG, U-SIG, (and UHR-SIG)) repeated in a 20MHz unit may also be applied to a data field. For the second type, the data field of a PPDU is repeated in a 20MHz unit equally to previous fields, and the same phase rotation may be applied to all fields of a PPDU.

In S920, the first STA may transmit a generated PPDU to the second STA.

A method described in the example of FIG. 9 may be performed by a first device 100 in FIG. 1. For example, at least one processor 102 of the first device 100 of FIG. 1 may be configured to generate a PPDU including an U-SIG field including at least one field indicating a PPDU related to a short frame and transmit a corresponding PPDU to the second STA. Furthermore, at least one memory 104 of a first device 100 may store instructions for performing a method described in the example of FIG. 9 or examples described below when executed by at least one processor 102.

FIG. 10 is a diagram for describing a method performed by a second STA receiving a PPDU related to a short frame according to the present disclosure.

In S1010, the second STA may receive from the first STA a PPDU including at least one field indicating a PPDU related to a short frame, and an U-SIG field including 1-bit indication information indicating one of the first type or the second type related to the data field of a PPDU.

The specific description of at least one field indicating a PPDU related to a short frame, and 1-bit indication information indicating one of the first type or the second type related to the data field of a PPDU, and phase rotation for PPDU fields is the same as described by referring to FIG. 9, so an overlapping description is omitted.

In S1020, the second STA may decode the data field of a PPDU based on at least one field and 1-bit indication information.

For example, the second STA may determine whether a corresponding PPDU is a PPDU related to a short frame based on at least one field. When it is a PPDU related to a short frame, the second STA may determine whether it is the first type or the second type (i.e., whether a data field is repeated in a 20Mhz unit) based on 1-bit indication information, and accordingly, may determine whether to apply a segment parser to a data field, a BCC interleaver parameter and a LDPC tone mapper parameter and correctly decode a data field accordingly.

A method described in the example of FIG. 10 may be performed by a second device 200 in FIG. 1. For example, at least one processor 202 of the second device 200 of FIG. 1 may be configured to receive from the first STA a PPDU including at least one field indicating a PPDU related to a short frame and an U-SIG field including 1-bit indication information indicating one of the first type or the second type related to the data field of a PPDU and decode the data field of a PPDU based on at least one field and 1-bit indication information. Furthermore, at least one memory 204 of a second device 200 may store instructions for performing a method described in the example of FIG. 10 or examples described below when executed by at least one processor 202.

The examples of FIGS. 9 and 10 may correspond to some of the various examples of the present disclosure. Hereinafter, various examples of the present disclosure including the example of FIGS. 9 and 10 will be described in more detail.

In embodiments described below, a case where a unit in which fields are duplicated in a frequency domain within a PPDU for a short frame is 20MHz and a wide bandwidth is 40, 80, 160, 320Mhz ... is described as a representative example to which the present disclosure is applied, but embodiments described below may be applied equally to a case where a unit in which fields are duplicated in a frequency domain is a different sized unit less than or greater than 20MHz as well as to a case of a wide bandwidth which is the integer multiple of a corresponding different sized unit.

Embodiment 1

This embodiment relates to PPDU classification. In other words, a method for indicating a PPDU for a short frame and a method for indicating the type of a PPDU for a short frame are described below.

Information indicating PPDU classification may be included in a SIG field such as U-SIG or UHR-SIG, etc. In the following example, it is described by assuming that information indicating PPDU classification is included in U-SIG, but a case where corresponding information is included in another SIG field such as UHR-SIG is included in the scope of the present disclosure.

A PPDU in various formats may be supported in UHR. For example, at least one PPDU format (and additional other PPDU formats) of a SU PPDU, a MU PPDU, a TB PPDU, an extended range PPDU (or a relay PPDU) and a NDP may be supported, and additionally, a PPDU for a short frame described in the present disclosure may also be supported. Which of these PPDU formats may be indicated through a PPDU type field (e.g., defined as a size of 2 bits or 3 bits) and/or an UL/DL field (e.g., 1 bit) included in the U-SIG field of a corresponding PPDU.

For example, the combination of the specific value of a PPDU type field and the specific value of an UL/DL field may be used to indicate that it is a PPDU for a short frame.

As another example, the specific value of a PPDU type field may be used to indicate that it is a PPDU for a short frame. A corresponding specific value may indicate that it is a PPDU for a short frame regardless of the value of a DL/UL field. In other words, when an UL/DL field is set as a value indicating UL (e.g., 1) and a PPDU type field is set as a specific value, it may indicate that a corresponding PPDU is a PPDU for a short frame in an uplink. In addition, when an UL/DL field is set as a value indicating DL (e.g., 0) and a PPDU type field is set as a specific value, it may indicate that a corresponding PPDU is a PPDU for a short frame in a downlink.

The type of a PPDU for a short frame may include the first type as in FIG. 8(c) (i.e., supports low latency, or non-duplicate in a 20Mhz unit of the data field of a PPDU) and the second type as in FIG. 8(d) (i.e., supports high reliability, or duplicate in a 20Mhz unit of the data field of a PPDU).

For example, this type of a PPDU for a short frame may be indicated through the PPDU type field of an U-SIG field. For example, the first specific value of a PPDU type field may indicate the first type of PPDU for a short frame, and the second specific value of a PPDU type field may indicate the second type of PPDU for a short frame.

As another example, the type of a PPDU for such a short frame may be indicated through additional 1-bit indication information (i.e., included in a field other than a PPDU type field). In other words, as described above, it is indicated that a corresponding PPDU is a PPDU for a short frame through a PPDU type field and/or an UL/DL field, and the type of a PPDU for a corresponding short frame may be indicated through additional 1-bit indication information.

Embodiment 2

This embodiment relates to a method for applying a BCC interleaver to a data field in a PPDU for a short frame.

In the second type of PPDU format for a short frame (or supporting high reliability), a data field is duplicated in a 20MHz unit, so a BCC interleaver may be applied as it is for a case where the existing defined DCM is used and a case where DCM is not used, respectively. In other words, the parameter of a BCC interleaver supporting the existing 20MHz bandwidth may be applied without change to generate one data field part in a 20MHz unit and duplicate it to other 20MHz unit(s).

In the first type of PPDU format for a short frame (or supporting low latency), a data field is not duplicated in a 20MHz unit, so it is necessary to define a new PHY operation/design for the application of a BCC interleaver.

Table 1 shows a BCC interleaver parameter for a case where DCM defined in the existing WLAN system (e.g., IEEE 802.11ac) is not applied.

[Table 1]

| Parameter | 20 MHz | 40 MHz | 80 MHz |
|---|---|---|---|
| $N_{COL}$ | 13 | 18 | 26 |
| $N_{ROW}$ | $4 \times N_{BPSCS}$ | $6 \times N_{BPSCS}$ | $9 \times N_{BPSCS}$ |
| $N_{ROT}\,(N_{SS}{\leq}4)$ | 11 | 29 | 58 |
| $N_{ROT}\,(N_{SS}{>}4)$ | 6 | 13 | 28 |

In Table 1, N_COL is a parameter for the number of columns of an interleaver. N_ROW is a parameter for the number of rows of an interleaver. N_ROT is a parameter for frequency rotation. N_SS is a parameter for the number of spatial streams. N_BPSCS is a parameter for the number of coded bits per single carrier per spatial stream.

Next, when DCM is applied, it is necessary to define a parameter for a BCC interleaver applied to 52 data tones within a 20MHz unit. Since an interleaver parameter defined for the existing 52-tone RU is defined for a case where the number of data tones is 48, it may not be applied to 52 data tones within the 20MHz unit of a PPDU for a short frame. Accordingly, for a 56-tone RU applied to the existing HE-SIG-A/HE-SIG-B, it is assumed that N_COL=13 and N_ROW=2*N_BPSCS, which are an interleaver parameter for a case where the number of data tones is 52, are the existing BCC interleaver parameter for a case where DCM is applied in the present disclosure.

The existing BCC interleaver parameters for 20MHz as described above may be applied (as it is or by being modified) to a PPDU for a short frame. In Table 1, BCC interleaver parameters for 40MHz and 80MHz may not be applied to a PPDU for the short frame of 40MHz and 80MHz bandwidths. It is because a tone plan assumed by 40MHz and 80MHz in Table 1 is different from a tone plan assumed by 40MHz and 80MHz bandwidths assumed by a PPDU for a short frame and accordingly, the number of data tones is different. As described by referring to FIG. 8, since a PPDU for a short frame has a structure in which a tone plan in a 20MHz unit is repeated (on a non-punctured channel), BCC interleaver parameters for 20MHz, not the existing BCC interleaver parameters for 40MHz and 80MHz, may be applied (as it is or by being modified) to a PPDU format for a short frame.

Among the interleaver parameters, N_ROT is a parameter defined for the transmission of multiple streams (e.g., MIMO), so it may not be considered in a PPDU format for a short frame that supports only SISO.

Embodiment 2-1

This embodiment relates to a method for distributing bits to each 20MHz channel by applying a segment parser before applying a BCC interleaver while using the existing BCC interleaver parameter for 20MHz as it is without change.

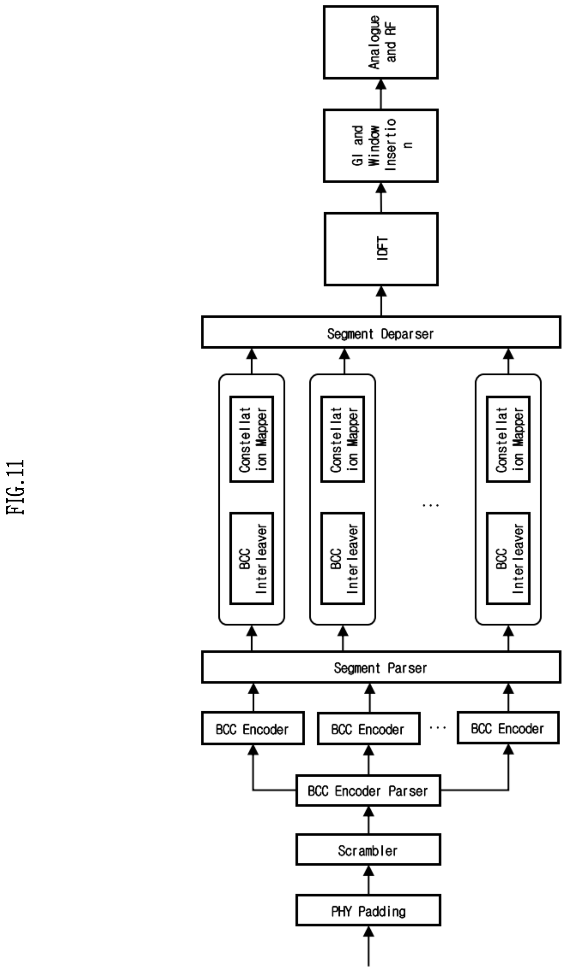

FIG. 11 is a diagram showing an example of a transmitter block diagram including a BCC interleaver block according to the present disclosure.

For example, a method for distributing bits may be a method for mapping the same bits in order of bit for each of all 20MHz channels. Specifically, the first bit may be mapped to the lowest 20MHz channel, the first bit may be mapped to the second lowest 20MHz channel, ... the first bit may be mapped to the highest 20MHz channel; and the second bit may be mapped to the lowest 20MHz channel, the second bit may be mapped to the second lowest 20MHz channel, ... the second bit may be mapped to the highest 20MHz channel; ... the last bit may be mapped to the lowest 20MHz channel, the last bit may be mapped to the second lowest 20MHz channel, ... the last bit may be mapped to the highest 20MHz channel.

In this way, a BCC interleaver may be applied to each 20MHz channel to which a bit distributed by a segment parser is mapped. Accordingly, N_COL=13 and N_ROW=4*N_BPSCS (when DCM is not applied) or N_COL=13 and N_ROW=2*N_BPSCS (when DCM is applied) which are parameters of the existing BCC interleaver for 20MHz (for a case where DCM is applied or a case where DCM is not applied, respectively) may be used equally.

Since only SISO transmission is supported in a PPDU for a short frame, stream parser, space-time block coding (STBC), cyclic shift diversity per space-time stream (CSD) per STS and spatial mapping may not be applied.

Embodiment 2-2

This embodiment relates to a method for changing and using the existing BCC interleaver parameter for 20MHz.

The number of 20MHz channels used for data transmission is N_20MHz. In this case, in Table 1, N_20MHz may be applied to one of N_COL or N_ROW among the interleaver parameters for 20MHz and changed as follows.

For example, when DCM is not applied, it may be N_COL=13*N_20MHz and N_ROW=4*N_BPSCS. Alternatively, when DCM is not applied, it may be N_COL=13 and N_ROW=4*N_BPSCS*N_20MHz. N_ROT may not be applied to SISO transmission.

For example, when DCM is applied, it may be N_COL=13*N_20MHz and N_ROW=2*N_BPSCS. Alternatively, when DCM is applied, it may be N_COL=13 and N_ROW=2*N_BPSCS*N_20MHz. N_ROT may not be applied to SISO transmission.

In this way, a PPDU format for a short frame that maximizes diversity gain may be effectively supported only by changing a simple BCC interleaver parameter without applying a segment parser.

Embodiment 2-3

This embodiment relates to a method for always applying the existing interleaver parameter for 20MHz regardless of the number of 20MHz channels within a PPDU bandwidth.

For example, when DCM is not applied, it may be N_COL=13 and N_ROW=4*N_BPSCS. When DCM is applied, it may be N_COL=13 and N_ROW=2*N_BPSCS. N_ROT may not be applied to SISO transmission.

Embodiment 3

This embodiment relates to a method for applying a LDPC tone mapper to a data field in a PPDU for a short frame.

In the second type of PPDU format for a short frame (or supporting high reliability), a data field is duplicated in a 20MHz unit, so a LDPC tone mapper may be applied as it is for a case where the existing defined DCM is used and a case where DCM is not used, respectively. In other words, the parameter of a LDPC tone mapper supporting the existing 20MHz bandwidth may be applied without change to generate one data field part in a 20MHz unit and duplicate it to other 20MHz unit(s).

In the first type of PPDU format for a short frame (or supporting low latency), a data field is not duplicated in a 20MHz unit, so it is necessary to define a new PHY operation/design for the application of a LDPC tone mapper.

Table 2 shows the parameter of a LDPC tone mapper for a case where DCM defined in the existing WLAN system (e.g., IEEE 802.11ac) is not applied.

[Table 2]

| Parameter | 20 MHz | 40 MHz | 80 MHz | 160 MHz, 80+80 MHz |
|---|---|---|---|---|
| $D_{TM}$ | 4 | 6 | 9 | 9 |

In Table 2, D_TM is a parameter for a LDPC tone mapping distance.

Next, when DCM is applied, it is necessary to define a LDPC tone mapper applied to 52 data tones within a 20MHz unit. The parameter of a LDPC tone mapper for a case where DCM is applied to the existing 52-tone RU (i.e., 48 data tones) may not be applied to 52 data tones within the 20MHz unit of a PPDU for a short frame. Accordingly, when the value of D_TM_DCM, which is the parameter of a LDPC tone mapper applied to 52 data tones within the 20MHz unit of a PPDU for a short frame when DCM is applied, is 2 or 1, it is assumed as the existing LDPC tone mapper parameter when DCM is applied in the present disclosure.

The existing LDPC tone mapper parameters for 20MHz as described above may be applied (as it is or by being modified) to a PPDU for a short frame. In Table 2, LDPC tone mapper parameters for 40MHz and 80MHz may not be applied to a PPDU for the short frame of 40MHz and 80MHz bandwidths. It is because a tone plan assumed by 40MHz and 80MHz in Table 2 is different from a tone plan assumed by 40MHz and 80MHz bandwidths assumed by a PPDU for a short frame and accordingly, the number of data tones is different. As described by referring to FIG. 8, since a PPDU for a short frame has a structure in which a tone plan in a 20MHz unit is repeated (on a non-punctured channel), LDPC tone mapper parameters for 20MHz, not the existing LDPC tone mapper parameters for 40MHz and 80MHz, may be applied (as it is or by being modified) to a PPDU format for a short frame.

Embodiment 3-1

This embodiment relates to a method for distributing bits to each 20MHz channel by applying a segment parser before applying a LDPC tone mapper while using the existing LDPC tone mapper parameter for 20MHz as it is without change.

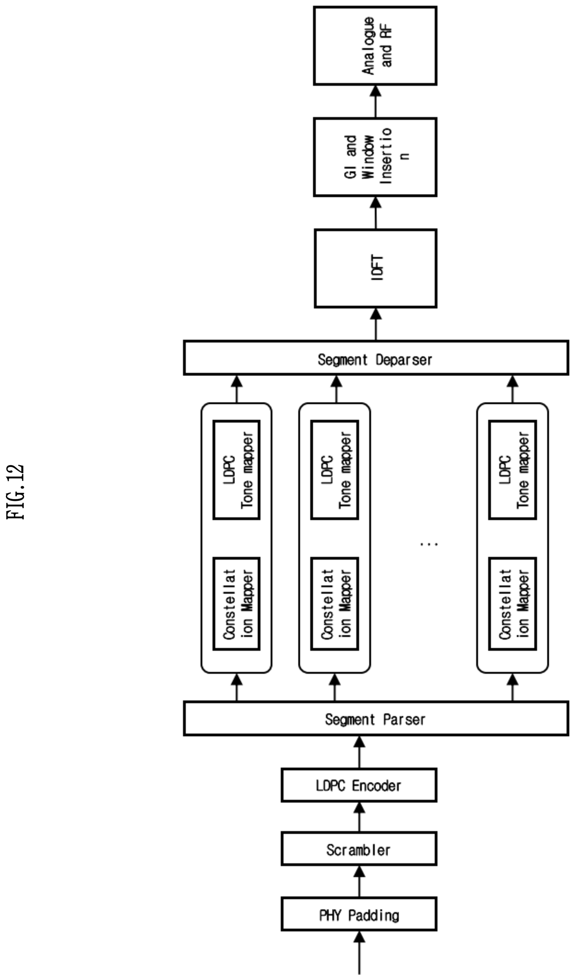

FIG. 12 is a diagram showing an example of a transmitter block diagram including a LDPC tone mapper block according to the present disclosure.

For example, a method for distributing bits may be a method for mapping the same bits in order of bit for each of all 20MHz channels. Specifically, the first bit may be mapped to the lowest 20MHz channel, the first bit may be mapped to the second lowest 20MHz channel, ... the first bit may be mapped to the highest 20MHz channel; and the second bit may be mapped to the lowest 20MHz channel, the second bit may be mapped to the second lowest 20MHz channel, ... the second bit may be mapped to the highest 20MHz channel; ... the last bit may be mapped to the lowest 20MHz channel, the last bit may be mapped to the second lowest 20MHz channel, ... the last bit may be mapped to the highest 20MHz channel.

In this way, a LDPC tone mapper may be applied to each 20MHz channel to which a bit distributed by a segment parser is mapped. Accordingly, D_TM=4 (when DCM is not applied), and D_TM_DCM=2 or 1 (when DCM is applied) which are parameters of the existing LDPC tone mapper for 20MHz (for a case where DCM is applied or a case where DCM is not applied, respectively) may be used equally.

Since only SISO transmission is supported in a PPDU for a short frame, stream parser, space-time block coding (STBC), cyclic shift diversity per space-time stream (CSD) per STS and spatial mapping may not be applied.

Embodiment 3-2

This embodiment relates to a method for changing and using the existing LDPC tone mapper parameter for 20MHz.

The number of 20MHz channels used for data transmission is N_20MHz. In this case, in Table 2, N_20MHz may be applied to LDPC tone mapper parameter D_TM for 20MHz and changed as follows.

For example, when DCM is not applied, it may be D_TM=4*N_20MHz.

For example, when DCM is applied, it may be D_TM_DCM=2*N_20MHz or 1*N_20MHz.

In this way, a PPDU format for a short frame that maximizes diversity gain may be effectively supported only by changing a simple LDPC tone mapper parameter without applying a segment parser.

Embodiment 3-3

This embodiment relates to a method for always applying the existing interleaver parameter for 20MHz regardless of the number of 20MHz channels within a PPDU bandwidth.

For example, when DCM is not applied, it may be D_TM=4. When DCM is applied, it may be D_TM_DCM=2 or 1.

Embodiment 4

This embodiment relates to phase rotation (or tone rotation) applied to a PPDU format for a short frame.

Phase rotation may be applied to lower a peak-to-average power ratio (PAPR), and in the existing PPDU format (e.g., the EHT PPDU of FIG. 7(e)), the same phase rotation is applied to fields from L-STF to EHT-STF, but it is not applied to EHT-LTF and a data field.

In a PPDU for a short frame, phase rotation may also be applied from L-STF to U-SIG (or from L-STF to UHR-SIG) to lower a PAPR.

For example, a phase rotation parameter applied to the k-th subcarrier in bandwidth BW may be indicated as y_k,BW.

A phase rotation parameter applied to 20MHz PPDU transmission may be $\gamma$_k,20 = 1.

A phase rotation parameter applied to 40MHz PPDU transmission may be $\gamma$_k,40 = 1 (k<0), j (k>=0).

A phase rotation parameter applied to 80MHz PPDU transmission may be $\gamma$_k,80 = 1 (k<-64), -1 (k>=-64).

For a 80+80MHz PPDU, a phase rotation parameter applied to each 80MHz frequency segment may be $\gamma$_k,80 = 1 (k<-64), -1 (k>=-64).

A phase rotation parameter applied to a 160MHz PPDU may be y_k,160 = 1 (k<-192), -1 (-192=<k<0), 1 (0=<k<64), -1 (k>=64).

A phase rotation parameter applied to a 320MHz PPDU may be y_k,320 = 1 (k<-448), -1 (-448=<k<-256), $\varphi$_1 (-256=<k<-192), -$\varphi$_1 (-192=<k<0), $\varphi$_2 (0=<k<64), -$\varphi$_2 (64=<k<256), $\varphi$_3 (256=<k<320), -$\varphi$_3 (k>=320). Here, $\varphi$_1, $\varphi$_2, ($\varphi$_3 may be determined based on values +1, -1 of a 80MHz frequency sub-block rotation parameter. For example, it may be $\varphi$_1 = 1, $\varphi$_2 = -1, $\varphi$_3 = -1. Alternatively, it may be $\varphi$_1 = 1, $\varphi$_2 = 1, $\varphi$_3 = -1.

According to the present disclosure, phase rotation as above may be applied equally to a data field within a PPDU for a short frame. In other words, the same phase rotation may be applied to all fields within a PPDU from L-STF to a data field.

Since a data field is repeated in a 20MHz unit like the remaining fields in the second type of PPDU for a short frame (or supporting high reliability), the same phase rotation as the remaining fields may also be applied to a data field.

Since a data field is not repeated in a 20MHz unit in the first type of PPDU for a short frame (or supporting low latency), a PAPR does not increase significantly, so phase rotation may also be applied only up to U-SIG (or UHR-SIG). In this case, since a channel estimated from L-LTF is used for decoding a data field, an implementation method for removing phase rotation from a channel status may be considered in order to eliminate the effect of phase rotation.

In order to reduce the complexity of implementation, considering that a channel estimated from L-LTF is used for decoding a data field, the same phase rotation may be applied to a data field in order to eliminate the effect of phase rotation.

Accordingly, regardless of the type of a PPDU for a short frame (i.e., the first type or the second type), or for all types of PPDUs for a short frame, the same phase rotation may be applied to the entire field (i.e., from L-STF to a data field).

Unlike a PPDU format in the existing WLAN system, a PPDU format for a short frame according to the present disclosure includes information indicating that it is a PPDU for a short frame and information indicating its type in a SIG field within a PPDU, and has a feature that a method distinct from the existing PPDU format is applied to a BCC interleaver, a LDPC tone mapper and phase rotation for a PPDU for a short frame. Accordingly, a new PPDU format for a short frame distinct from the existing PPDU format may be efficiently configured.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed by the present disclosure is mainly described based on an example applied to an IEEE 802.11-based system, 5G system, but may be applied to various WLAN or wireless communication systems other than the IEEE 802.11-based system.

**Claims**

1. A method performed by a first station (STA) in a wireless local area network (WLAN) system, the method comprising:

   generating a physical layer protocol data unit (PPDU) including at least one field indicating a PPDU related to a short frame, and a universal-signal (U-SIG) field including 1-bit indication information indicating one of a first type or a second type related to a data field of the PPDU; and
   transmitting the PPDU to a second STA.

2. The method of Claim 1, wherein:
   the at least one field includes at least one of a PPDU type field or an uplink/downlink (UL/DL) field.

3. The method of Claim 1, wherein:
   the 1-bit indication information is included in a field other than the at least one field within the U-SIG field.

4. The method of Claim 1, wherein:

   the first type corresponds to a PPDU format in which the data field of the PPDU is not duplicated in a 20MHz unit, and
   the second type corresponds to a PPDU format in which the data field of the PPDU is duplicated in the 20MHz unit.

5. The method of Claim 1, wherein for the first type, based on a binary convolutional code (BCC) interleaver being applied to and a dual carrier modulation (DCM) not being applied to the data field of the PPDU:

   N_COL=13*N_20MHz and N_ROW=4*N_BPSCS, or N_COL=13 and N_ROW=4*N_BPSCS*N_20MHz,
   N_COL is a parameter for a number of columns of the BCC interleaver,
   N_20MHz is a parameter for a number of 20MHz channels,
   N_ROW is a parameter for a number of rows of the BCC interleaver, and
   N_BPSCS is a parameter for a number of coded bits per subcarrier per spatial stream.

6. The method of Claim 1, wherein for the first type, based on a BCC interleaver being applied to and a DCM being applied to the data field of the PPDU:

   N_COL=13*N_20MHz and N_ROW=2*N_BPSCS, or N_COL=13 and N_ROW=2*N_BPSCS*N_20MHz,
   N_COL is a parameter for a number of columns of the BCC interleaver,
   N_20MHz is a parameter for a number of 20MHz channels,
   N_ROW is a parameter for a number of rows of the BCC interleaver, and
   N_BPSCS is a parameter for a number of coded bits per single subcarrier for a spatial stream.

7. The method of Claim 1, wherein for the first type, based on a low density parity check code (LDPC) tone mapper being applied to and a DCM not being applied to the data field of the PPDU:

$$D\_TM=4*N\_20MHz,$$

   D_TM is a parameter for a LDPC tone mapping distance, and
   N_20MHz is a parameter for a number of 20MHz channels.

8. The method of Claim 1, wherein for the first type, based on a LDPC tone mapper being applied to and a DCM being applied to the data field of the PPDU:

$$D\_TM\_DCM=2*N\_20MHz, \text{ or } D\_TM\_DCM=1*N\_20MHz,$$

   D_TM_DCM is a parameter for a LDPC tone mapping distance based on the DCM being applied to a LDPC encoded stream, and
   N_20MHz is a parameter for a number of 20MHz channels.

9. The method of Claim 1, wherein:
for both the first type and the second type, a same phase rotation is applied to all fields of the PPDU.

10. The method of Claim 1, wherein:

the PPDU includes a legacy-short training field (L-STF) field, a legacy-long training field (L-LTF) field, a legacy-signal (L-SIG) field, a repeated L-SIG (RL-SIG) field, the U-SIG field, and a data field in order, or
the PPDU includes the L-STF field, the L-LTF field, the L-SIG field, the RL-SIG field, the U-SIG field, an ultra high reliability (UHR)-SIG field, and the data field in order.

11. The method of Claim 10, wherein:
the L-SIG field, the RL-SIG field, the U-SIG field, the UHR-SIG field, and the data field have a same subcarrier spacing as and a same fast Fourier transform (FFT) size as the L-LTF field.

12. A first station (STA) device in a wireless local area network (WLAN) system, the device comprising:

at least one transceiver; and
at least one processor connected to the at least one transceiver,
wherein the at least one processor is configured to:

generate a physical layer protocol data unit (PPDU) including at least one field indicating a PPDU related to a short frame, and a universal-signal (U-SIG) field including 1-bit indication information indicating one of a first type or a second type related to a data field of the PPDU; and
transmit, through the at least one transceiver, the PPDU to a second STA,

wherein 1-bit indication information of the U-SIG field indicates the one of the first type or the second type related to the data field of the PPDU.

13. A method performed by a second station (STA) in a wireless local area network (WLAN) system, the method comprising:

receiving, from a first STA, a physical layer protocol data unit (PPDU) including at least one field indicating a PPDU related to a short frame, and a universal-signal (U-SIG) field including 1-bit indication information indicating one of a first type or a second type related to a data field of the PPDU; and
based on the at least one field and the 1-bit indication information, decoding the data field of the PPDU.

14. A second station (STA) device in a wireless local area network (WLAN) system, the device comprising:

at least one transceiver; and
at least one processor connected to the at least one transceiver,
wherein the at least one processor is configured to:

receive, through the at least one transceiver, from a first STA, a physical layer protocol data unit (PPDU) including at least one field indicating a PPDU related to a short frame, and a universal-signal (U-SIG) field including 1-bit indication information indicating one of a first type or a second type related to a data field of the PPDU; and
based on the at least one field and the 1-bit indication information, decode the data field of the PPDU.

15. A processing device configured to control a station (STA) in a wireless local area network (WLAN) system, the processing device comprising:

at least one processor; and
at least one computer memory operably connected to the at least one processor, and based on being executed by the at least one processor, storing instructions for performing a method according to any one claim of Claim 1 to Claim 11.

16. At least one non-transitory computer-readable medium storing at least one instruction, wherein:
the at least one instruction controls a device to perform a method according to any one claim of Claim 1 to Claim 11 in a wireless local area network (WLAN) system by being executed by at least one processor.

EP 4 648 367 A1

# FIG.1

## FIG.2

## FIG.3

# FIG.4

| busy | Occupied Medium | bo_e | Elapsed Backoff time |

⬇ Packet arrived at MAC

bo_r Residual Backoff time

# FIG.5

## FIG.6

| STF | LTF | SIG | ⋯ | DATA |
|-----|-----|-----|---|------|

| SERVICE | PSDU | PPDU TAIL | PAD |
|---------|------|-----------|-----|

| OCTETS:2 | 2 | 6 | 6 | 6 | 2 | 6 | 2 | 4 | 0-7951 | 4 |
|---|---|---|---|---|---|---|---|---|---|---|
| FRAME CONTROL | DURATION /ID | ADDRESS 1 | ADDRESS 2 | ADDRESS 3 | SEQUENCE CONTROL | ADDRESS 4 | QoS CONTROL | HT CONTROL | FRAME BODY | FCS |

FIG.7

**(a)**

| 8 μs | 8 μs | 4 μs | |
|---|---|---|---|
| L-STF | L-LTF | L-SIG | Data |

PPDU Format(IEEE 802.11a/g)

**(b)**

Data HT-LTFs 4 μs per LTF    Extension HT-LTFs 4 μs per LTF

| 8 μs | 8 μs | 4 μs | 8 μs | 4 μs | | | | | | |
|---|---|---|---|---|---|---|---|---|---|---|
| L-STF | L-LTF | L-SIG | HT-SIG | HT-STF | HT-LTF | ··· | HT-LTF | HT-LTF | ··· | HT-LTF | Data |

HT PPDU Format(IEEE 802.11n)

**(c)**

| 8 μs | 8 μs | 4 μs | 8 μs | 4 μs | 4 μs per VHT-LTF symbol | 4 μs | |
|---|---|---|---|---|---|---|---|
| L-STF | L-LTF | L-SIG | VHT-SIG-A | VHT-STF | VHT-LTF | VHT-SIG-B | Data |

VHT PPDU Format(IEEE 802.11ac)

**(d)**

Variable durations per HE-LTF symbol

| 8 μs | 8 μs | 4 μs | 4 μs | 8 μs | 4 μs per symbol | 4 μs | | | | |
|---|---|---|---|---|---|---|---|---|---|---|
| L-STF | L-LTF | L-SIG | RL-SIG | HE-SIG-A | HE-SIG-B | HE-STF | HE-LTF | ··· | HE-LTF | Data | PE |

HE PPDU Format(IEEE 802.11ax)

**(e)**

EHT-LTF symbol duration depends on the GI + LTF size

| 8μs | 8μs | 4μs | 4μs | 8μs:4μs per symbol | 4μs per symbol | 4μs | | | | |
|---|---|---|---|---|---|---|---|---|---|---|
| L-STF | L-LTF | L-SIG | RL-SIG | U-SIG | EHT-SIG | EHT-STF | EHT-LTF | ··· | EHT-LTF | Data | PE |

EHT MU PPDU format(IEEE 802.11be)

**(f)**

EHT-LTF symbol duration depends on the GI + LTF size

| 8μs | 8μs | 4μs | 4μs | 8μs:4μs per symbol | 8μs | | | | |
|---|---|---|---|---|---|---|---|---|---|
| L-STF | L-LTF | L-SIG | RL-SIG | U-SIG | EHT-STF | EHT-LTF | ··· | EHT-LTF | Data | PE |

EHT TB PPDU format(IEEE 802.11be)

EP 4 648 367 A1

# FIG.8

(a)

| L-STF | L-LTF | L-SIG | RL-SIG | U-SIG | DATA |
|-------|-------|-------|--------|-------|------|

(b)

| L-STF | L-LTF | L-SIG | RL-SIG | U-SIG | UHR-SIG | DATA |
|-------|-------|-------|--------|-------|---------|------|

(c)

| L-STF | L-LTF | L-SIG | RL-SIG | U-SIG | DATA |
|-------|-------|-------|--------|-------|------|
| L-STF | L-LTF | L-SIG | RL-SIG | U-SIG | DATA |
| L-STF | L-LTF | L-SIG | RL-SIG | U-SIG | DATA |
| L-STF | L-LTF | L-SIG | RL-SIG | U-SIG | DATA |

(c)

| L-STF | L-LTF | L-SIG | RL-SIG | U-SIG | DATA (DUP) |
|-------|-------|-------|--------|-------|------------|
| L-STF | L-LTF | L-SIG | RL-SIG | U-SIG | DATA (DUP) |
| L-STF | L-LTF | L-SIG | RL-SIG | U-SIG | DATA (DUP) |
| L-STF | L-LTF | L-SIG | RL-SIG | U-SIG | DATA |

FIG.9

Generate PPDU including
at least one field indicating
PPDU related to short frame, and
U-SIG field including
1-bit indication information indicating
one of first type or second type
related to data field of PPDU ⸦ S910

Transmit PPDU to second STA ⸦ S920

FIG. 10

Receive, from first STA, PPDU including
at least one field indicating PPDU
related to short frame, and
U-SIG field including
1-bit indication information indicating
one of first type or second type
related to data field of PPDU ⸦ S1010

Based on at least one field and 1-bit indication
information, decode data field of PPDU ⸦ S1020

FIG.11

FIG.12

## INTERNATIONAL SEARCH REPORT

| International application No. |
| --- |
| **PCT/KR2023/022027** |

### A. CLASSIFICATION OF SUBJECT MATTER

**H04L 27/26**(2006.01)i

According to International Patent Classification (IPC) or to both national classification and IPC

### B. FIELDS SEARCHED

Minimum documentation searched (classification system followed by classification symbols)

H04L 27/26(2006.01); H04L 1/00(2006.01); H04L 5/00(2006.01); H04W 84/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 짧은 프레임(short frame), 타입(type), U-SIG 필드(universal-signal field), UHR(ultra high reliability), 지시 정보(indication information)

### C. DOCUMENTS CONSIDERED TO BE RELEVANT

| Category* | Citation of document, with indication, where appropriate, of the relevant passages | Relevant to claim No. |
| --- | --- | --- |
| Y | LEE, Wook Bong. Thoughts on U-SIG Contents. doc.: IEEE 802.11-20/0959r0. 30 June 2020.<br>See slides 2, 7 and 9. | 1-16 |
| Y | LANANTE, Leonardo et al. PPDU Design for Short Frames. doc.: IEEE 802.11-22/1939r0. 19 December 2022.<br>See slides 6-7 and 9. | 1-16 |
| Y | KR 10-2022-0113462 A (LG ELECTRONICS INC.) 12 August 2022 (2022-08-12)<br>See paragraphs [0301]-[0303], [0317], [0326], [0407]-[0408] and [0416]-[0417]. | 5-8 |
| A | US 2022-0393813 A1 (NEWRACOM, INC.) 08 December 2022 (2022-12-08)<br>See paragraphs [0074]-[0162]; and figures 6-15. | 1-16 |
| A | WO 2022-216000 A1 (LG ELECTRONICS INC.) 13 October 2022 (2022-10-13)<br>See paragraphs [0122]-[0281]; and figures 11-15. | 1-16 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 April 2024** | **09 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/022027**

| Patent document cited in search report | | | Publication date (day/month/year) | Patent family member(s) | | | Publication date (day/month/year) |
|---|---|---|---|---|---|---|---|
| KR | 10-2022-0113462 | A | 12 August 2022 | AU | 2021-214471 | A1 | 22 September 2022 |
| | | | | BR | 112022014765 | A2 | 11 October 2022 |
| | | | | CA | 3169041 | A1 | 05 August 2021 |
| | | | | CN | 115152167 | A | 04 October 2022 |
| | | | | EP | 4089938 | A1 | 16 November 2022 |
| | | | | JP | 2023-511700 | A | 22 March 2023 |
| | | | | US | 11902022 | B2 | 13 February 2024 |
| | | | | US | 2023-0129436 | A1 | 27 April 2023 |
| | | | | US | 2023-0327805 | A1 | 12 October 2023 |
| | | | | US | 2023-0388051 | A1 | 30 November 2023 |
| | | | | WO | 2021-153940 | A1 | 05 August 2021 |
| US | 2022-0393813 | A1 | 08 December 2022 | US | 11398886 | B2 | 26 July 2022 |
| | | | | US | 2021-0014018 | A1 | 14 January 2021 |
| WO | 2022-216000 | A1 | 13 October 2022 | EP | 4322432 | A1 | 14 February 2024 |
| | | | | KR | 10-2023-0164009 | A | 01 December 2023 |

Form PCT/ISA/210 (patent family annex) (July 2022)